# EUROPEAN PATENT APPLICATION

(11) **EP 0 805 369 A1**
(43) Date of publication of application: **05.11.1997**
(21) Application number: 97830201.6
(22) Date of filing: 30.04.1997
(51) Int. Cl.: G02C 1/02, G02C 5/22

(54) **Constructionally very simple and light eyeglass frame**

(30) Priority: 03.05.1996 IT MI960333 U
(71) Applicant: Filospiave Group S.p.A., 31040 Segusino, Treviso (IT)
(72) Inventor: Lozza, Lucio, 31040 Segusino, (Treviso) (IT)
(74) Representative: Cicogna, Franco

(57) **Abstract**

The present invention relates to a constructionally very simple and light eyeglass frame. The eyeglass frame comprises eyeglass rods each constituted by a wire-like element which is bent on itself so as to define two wire-like portions spaced one on the top of the other.

These two wire-like portions have a part thereof formed as two coaxial circumference portions housing therebetween an eyelet element supported at the end of a wire-like portion which can be fixed to one lens of the eyeglass frame.

The eyelet element is traversed by a pin supported by two wire-like portions, at the part having the shape of two coaxial circumference portions, so as to provide an articulated type of coupling between the rod and the wire-like portion coupled to the eyeglass lens.

## Description

### BACKGROUND OF THE INVENTION

The presente invention relates to a constructionally very simple and light eyeglass frame.

Eyeglass assemblies having a practically invisible eyeglass frame are already known.

In particular, the eyeglass frames of these prior eyeglass assemblies conventionally comprise a lens supporting frame having a very small thickness and rods also having a very reduced thickness.

The eyeglass frames of the above mentioned type, however, have the drawback of a poor mechanical strength and a comparatively complex construction to provide a proper support for the eyeglass lenses.

### SUMMARY OF THE INVENTION

Accordingly, the aim of the present invention is to overcome the above mentioned drawbacks, by providing an eyeglass frame which is very simple from a mere construction standpoint and which, moreover, is actually of an "invisible" type, while having a very satisfactory mechanical strength.

Within the scope of the above mentioned aim, a main object of the present invention is to provide such an eyeglass frame having a very reduced weight so as to provide an eyeglass assembly which can be used by an user in a maximum comfort condition.

Another object of the present invention is to provide such an eyeglass frame which, owing to its constructional simplicity, can be made at a very reduced cost.

Yet another object of the present invention is to provide such an eyeglass frame which is very safe and reliable in operation.

According to one aspect of the present invention, the above mentioned aim and objects, as well as yet other objects, which will become more apparent hereinafter, are achieved by a constructionally very simple and light eyeglass frame, characterized in that said eyeglass frame comprises eyeglass rods each of which is formed by a wire-like element bent on itself so as to define two wire-like portions, said wire-like portions being spaced one on a top of the other, said two wire-like portions having a part thereof including two coaxial circumference portions to provide an articulated coupling between said rods and wire-like portion.

### BRIEF DESCRIPTION OF THE DRAWINGS

Further characteristics and advantages of the eyeglass frame according to the present invention will become more apparent hereinafter from the following disclosure of said eyeglass frame which is illustrated, by way of an indicative, but not limitative example, in the figures of the accompanying drawings, where:

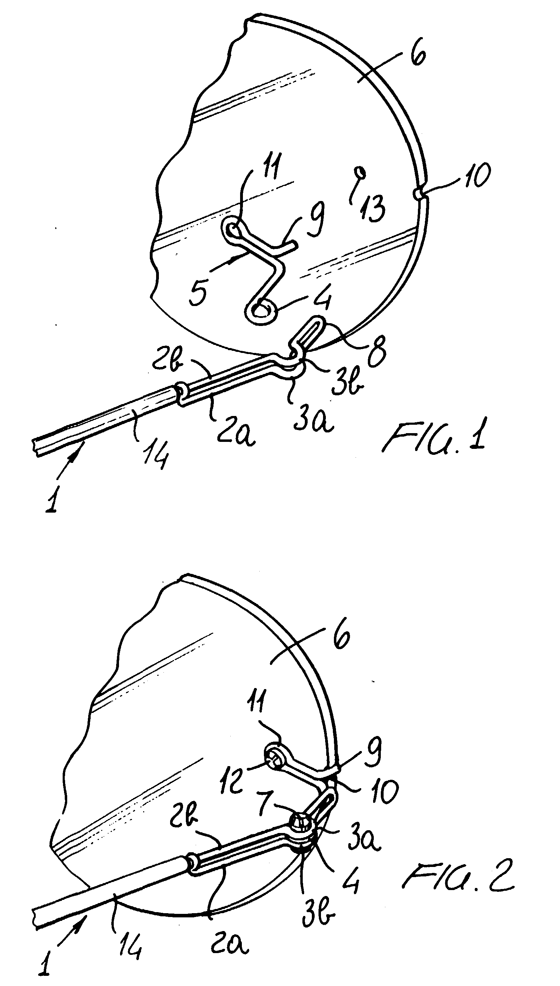

Figure 1 is an exploded perspective view illustrating a portion of the eyeglass frame according to the present invention, being shown in exploded form during an intermediate assembling step thereof;
Figure 2 is a further perspective view illustrating the eyeglass frame portion according to the present invention in an assembled condition;
Figure 3 illustrates the detail related to the preceding figures, as seen by a top plan view and in an exploded representation;

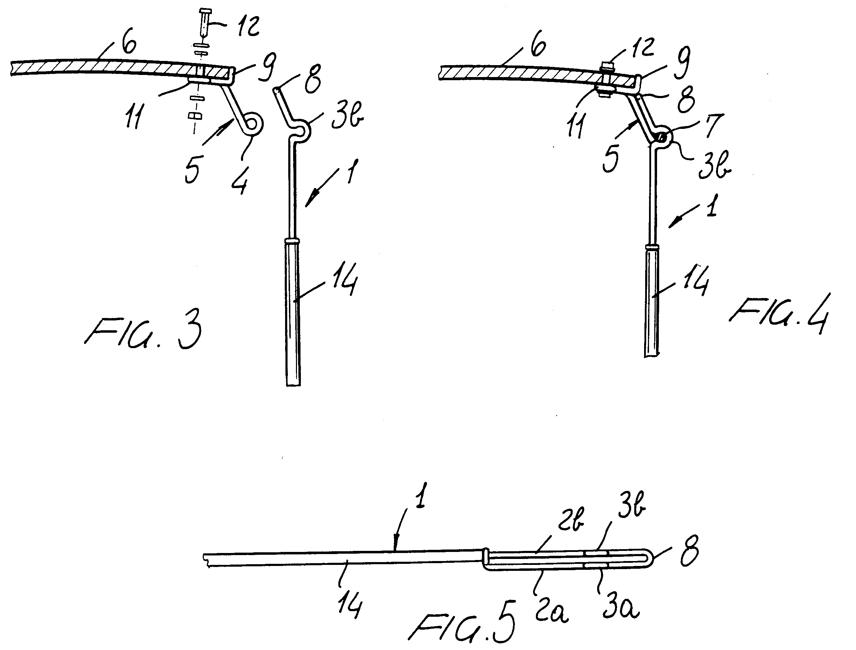

Figure 4 is a top plan view illustrating the same detail as figure 3, in an assembled condition thereof;
Figure 5 is a side elevation view illustrating an end portion of an eyeglass frame to be coupled to said wire-like portion, provided for connection to the eyeglass lens;
Figure 6 is a front elevation view illustrating a central region of the eyeglass frame;
Figure 7 illustrates that same eyeglass frame region as shown in figure 6, as seen by a top plan view;
   and
Figure 8 is a side elevation view illustrating the central region of the subject eyeglass frame.

### DESCRIPTION OF THE PREFERRED EMBODIMENTS

With reference to the number references of the above mentioned figures, the eyeglass frame according to the present invention comprises a pair of eyeglass rods 1, each formed by a wire-like element, which is bent on itself, at an end portion thereof, so as to provide two wire or thread-like portions 2a and 2b, which are arranged one above the other in a spaced apart relationship.

The wire-like portions 2a and 2b are contoured, at an intermediate portion thereof, as two coaxial circumference parts 3a and 3b. The circumference parts 3a and 3b house therebetween an eyelet element 4, which is supported at an end of a wire-like portion 5, to be coupled to a lens 6 of the eyeglass pair.

More specifically, the eyelet element 4 is traversed by a pivot pin 7, which is supported by the two circumference parts 3a and 3b so as to provide an articulated coupling between the rod 1 and wire-like portion 5 associated with the glass 6.

The pivot pin 7 can merely comprise a bolt coupling, used for providing a rotary coupling between the rod 1 and wire-like portion 5 at the eyelet element 4.

The loop 8 connecting to one another the two wire-like portions 2a and 2b bears, with the rod 1 being in an opening condition, against the wire-like portion 5 so as to control the opening width of the rod 1.

Since the rod 1 and the wire-like portion 5 are made of a simply bent wire or thread-like element, the bearing of the loop 8 against the wire-like portion 5 will also provide the articulated coupling between the rod 1 and wire-like portion 5 with a proper resiliency, just deriving from the resiliency of the individual components thereof.

As shown, the wire-like portion 5 is moreover provided, at the end thereof opposite to said eyelet element 4, with a bent portion 9 firmly engaging in a recessed section 10 defined on the edge of the glass 6.

Furthermore, the wire-like portion 5 is provided, at a middle region thereof, with a slot 11 which is made by bending the wire-like portion 5 and which is used for affixing said wire-like portion 5 to said glass 6, for example by a bolt element 12 passing through the slot 11 and a hole 13 as suitably formed on the body of said lens 6.

The eyeglass rod 1 can moreover comprise a coating 14, having an aesthetic finishing function.

The other end of the rod 1 has a configuration analogous to that of the conventional eyeglass rods, in order to properly bear on the ears of an user.

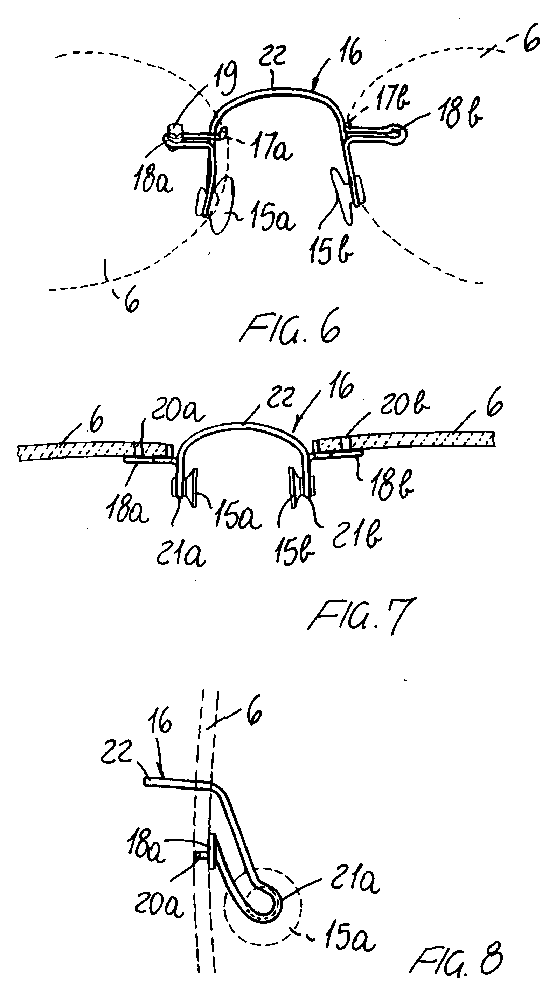

As shown in figures 6 to 8, the nose pieces 15a and 15b of the subject eyeglass frame are supported by a bent wire or thread-like portion 16, connected to the eyeglass lenses 6.

More specifically, the wire or thread-like portion 16 is provided with two bent ends 16a and 16b which can be engaged in corresponding recesses 17a and 17b formed on the edges of said lenses 6.

Said wire-like portion 16, in particular, is bent on itself, near the mentioned ends, so as to provide two slots 18a and 18b to be used for connection, by bolt elements 19, to the lenses 6 which are provided, correspondingly, with holes 20a and 20 for engaging therein the bolt elements 19.

After the slots 18a and 18b, the mentioned wire-like portion 16 defines, symmetrically of the middle plane of the eyeglass frame, two loops 21a and 21b supporting the nose pieces 15a and 15b and a central nose bridging element 22.

From the above disclosure and from the observation of the figures of the accompanying drawings, it should be apparent that the eyeglass frame according to the present invention fully achieves the intended aim and objects.

In particular, the fact is to be pointed out that an eyeglass frame has been provided which has a very small visual impact, and a very small weight, so as to provide a comfortable eyeglass assembly which will provide the user with a good comfort even if the assembly is continuously born by the user.

The lightness of the subject eyeglass frame can be moreover enhanced by using, for the wire-like portion constituting the eyeglass frame, very light materials such as titanium.

In practicing the invention, the used materials, as well as the contingent size and shapes can be any, depending on requirements.

## Claims

1. A constructionally very simple and light eyeglass frame, characterized in that said eyeglass frame comprises eyeglass rods each of which is formed by a wire-like element bent on itself so as to define two wire-like portions, said wire-like portions being spaced one on a top of the other, said two wire-like portions having a part thereof including two coaxial circumference portions to provide an articulated coupling between said rods and wire-like portion.

2. An eyeglass frame, according to Claim 1, wherein said two wire-like portions are coupled by a coupling loop bearing, with a rod in an opening position, against the wire-like portion bearing said eyelet element, in order to control the opening width of said rods.

3. An eyeglass frame, according to Claim 1, wherein said wire-like portion can be engaged, by an end thereof opposite to said eyelet element, in a recess formed on an edge of an eyeglass lens and being adapted to be connected, by a middle portion thereof, of slot configuration, in a hole formed in said eyeglass lens.

4. An eyeglass frame, according to Claim 1, wherein said eyeglass frame comprises moreover a bolt element for connecting said wire-like portion to said lens, said bolt element passing through said hole defined in said eyeglass lens and said slot of said wire-like portion.

5. An eyeglass frame, according to Claim 1, wherein said eyeglass frame comprises moreover a central wire-like portion extending between said lenses and supporting nose bearing means by which said eyeglass frame can bear on a nose portion of an user.

6. An eyeglass frame, according to Claim 5, wherein said central wire-like portion is provided with bent end which can be engaged in recesses formed on the edges of said lenses.

7. An eyeglass frame, according to Claim 5, wherein said central wire-like portion is bent on itself, near the ends thereof, to provide two slots for connecting said central wire-like portion to said lenses, said lenses being correspondingly provided with coupling holes.

8. An eyeglass frame, according to Claim 5, wherein said central wire-like portion is provided, starting from said slots, with two loop portions symmetrically extending with respect to a middle plane of said eyeglass frame and each of which supports a nose bearing piece.

9. An eyeglass frame, according to Claim 8, wherein said central wire-like portion is provided with a coupling bridging piece connecting said two loop portions.
